# EUROPEAN PATENT SPECIFICATION

(11) **EP 3 596 132 B1**
(45) Date of publication and mention of the grant of the patent: **05.05.2021**
(21) Application number: 18714935.6
(22) Date of filing: 14.03.2018
(51) Int. Cl.: C08B 13/00

(54) **PROCESS FOR RECOVERING AN ESTERIFIED CELLULOSE ETHER FROM A REACTION PRODUCT MIXTURE**
VERFAHREN ZUR RÜCKGEWINNUNG EINES VERESTERTEN CELLULOSEETHERS AUS EINEM REAKTIONSPRODUKTGEMISCH
PROCÉDÉ PERMETTANT DE RÉCUPÉRER UN ÉTHER DE CELLULOSE ESTÉRIFIÉE CONTENU DANS UN MÉLANGE DE PRODUITS RÉACTIONNELS

(30) Priority: 17.03.2017 US 201762472727 P
(43) Date of publication of application: 22.01.2020
(73) Proprietor: Nutrition & Biosciences USA 1, LLC, Rochester, NY 14623 (US)
(72) Inventor: PETERMANN, Oliver, 29699 Bomlitz (DE); KELLING, Rene, 29699 Bomlitz (DE); SPREHE, Matthias, 29699 Bomlitz (DE)
(74) Representative: f & e patent
(86) International application number: PCT/US2018/022338
(87) International publication number: WO 2018/170062

(56) References cited:
- WO-A1-2013/148154
- WO-A1-2015/041973

## Description

### FIELD

The present invention relates to an improved process for recovering an ester of a cellulose ether from a reaction product mixture.

### INTRODUCTION

Esters of cellulose ethers, their uses and processes for preparing them are generally known in the art.

A common process for producing esterified cellulose ethers is described in WO 2013/148154. Typically a cellulose ether is reacted with an aliphatic monocarboxylic acid anhydride or a di- or tricarboxylic acid anhydride or a combination of an aliphatic monocarboxylic acid anhydride and a di- or tricarboxylic acid anhydride in the presence of an aliphatic carboxylic acid and optionally an esterification catalyst.

Some esterified cellulose ethers have importance uses. Hydroxypropyl methyl cellulose acetate succinate (HPMCAS), hydroxypropyl methyl cellulose acetate (HPMCA) and hydroxypropyl methyl cellulose phthalate (HPMCP) are useful in pharmaceutical dosage forms. HPMCAS is useful as an enteric polymer for pharmaceutical dosage forms. Enteric polymers are those that remain intact in the acidic environment of the stomach. Dosage forms coated with such polymers protect the drug from inactivation or degradation in the acidic environment or prevent irritation of the stomach by the drug.

In a conventional method of recovering an esterified cellulose ether, such as HPMCAS, HPMCA or HPMCP, from its reaction product mixtures after esterification, cold water is poured to the reaction product mixture in order to initiate the precipitation of the product and to dilute and remove the impurities. However, applying this method, esters of cellulose ethers in the form of a fine powder or granules cannot be obtained because inter-particle coagulation occurs to a very large extent. Esterified cellulose ethers, such as HPMCAS or HPMCA, tend to exhibit a very tacky nature in the reaction product mixture in the presence of an aliphatic carboxylic acid, such as acetic acid, and an alkali metal carboxylate, such as sodium acetate. The inter-particle coagulation prevents water from penetrating between the particles, so that it becomes difficult to effectively remove impurities like acetic acid, sodium acetate, succinic acid, phthalic acid, unreacted hydroxypropyl methyl cellulose (HPMC) and others. Moreover, additional milling or crushing of the product is required to obtain a granular product.

Several methods have been suggested to address this problem.

U.S. Patent No. 4,226,981 and International Patent Application WO 2005/115330 disclose a process for preparing mixed esters of cellulose ethers, such as HPMCAS or HPMCA, by esterifying hydroxypropyl methyl cellulose with succinic anhydride and acetic anhydride in the presence of an alkali carboxylate, such as sodium acetate, as the esterification catalyst and acetic acid as the reaction medium. After completion of the esterification reaction, a large volume of water, specifically 10 times by volume of water, is added to the reaction product mixture so that the reaction product is precipitated. The precipitated product is then subjected to a thorough washing with water to remove impurities and dried to produce a mixed ester in the powdery or granular form.

European Patent Application EP 0 219 426 discloses a process for producing HPMCP or HPMCAS, followed by addition of a large amount of water to the reaction product mixture and the precipitate formed in the mixture is collected by filtration and repeatedly washed with water until the washing precipitate is no longer acidic.

US Patent Application Publication No. US 2004/0152886 addresses the need of preventing coagulation of HPMCP particles so that impurities like phthalic acid and acetic acid present between the particles can contact with water and be washed away. US 2004/0152886 suggests increasing the fluidity of the reaction product mixture by adding a fluidization solvent as a post-treatment process, and spraying it into water through a spray nozzle.

In International patent application WO 2013/148154, an improved process is described for precipitating an esterified cellulose ether from its reaction product mixture. According to this method a reaction product mixture comprising the esterified cellulose ether is contacted with water and the combination of water and the reaction product mixture is subjected to a shear rate of at least 800 s⁻¹. Substantial coagulation of the particles of the esterified cellulose ether during or after precipitation and during the washing of the esterified cellulose ether can be prevented. A non-tacky finely powdered ester of a cellulose ether is obtained.

International patent application WO 2015/041973 discloses a method of improving the separability of an esterified cellulose ether from a washing liquor in which the esterified cellulose ether is suspended for purification purposes after it has been precipitated and separated from the reaction product mixture.

Much research effort has been spent by the skilled artisans on those esterified cellulose ethers that are useful for increasing the bioavailability of poorly water-soluble drugs, i.e., the *in vivo* absorption of such drugs by an individual upon ingestion. A common procedure is to form a solid dispersion of the drug in the esterified cellulose ether; the esterified cellulose ether is aimed at reducing the crystallinity of the drug. Known methods for preparing such solid dispersion are by spray-drying or by melt-extrusion. In a melt extrusion process an esterified cellulose ether, a drug and optional additive(s) are blended and subjected to melt-extrusion, such as injection molding, melt casting or compression molding. Melt extrusion is highly desirable because unlike spray-drying no organic solvent is needed. Esterified cellulose ethers which are particularly suitable for melt extrusion have a low glass transition temperature T_{g} due to their low viscosity and/or specific degrees of ether or ester substitution. Such esterified cellulose ethers are disclosed in International patent applications WO 2014/137778, WO 2014/137777, and 2014/137789 and in US patent applications US 2014/0357681 and US 2016/0095928. Unfortunately, such esterified cellulose ethers exhibit an even more tacky nature than other esterified cellulose ethers in the reaction product mixture in the presence of an aliphatic carboxylic acid, such as acetic acid, and an alkali metal carboxylate, such as sodium acetate.

Hence, there is still the urgent need to find an improved process for recovering esterified cellulose ether from its reaction product mixture. Accordingly, an object of the present invention is to provide a process wherein substantial coagulation of the particles of the esterified cellulose ether after precipitation from the reaction product mixture can be prevented. Another object of the present invention is to provide a process in which substantial coagulation and tackiness of the particles of the esterified cellulose ether during the washing of the esterified cellulose ether can be prevented to improve its handling, transportability and washability during the purification process. Yet another object of the present invention is to provide a process by which a non-tacky finely powdered esterified cellulose ether can be obtained. It would be particularly desirable if one or all these objects of the present invention were even achieved for esterified cellulose ethers which are particularly tacky after precipitation from the reaction product mixture.

### SUMMARY

Surprisingly, a process has been found wherein i) coagulation and tackiness of the particles of the esterified cellulose ether during or after precipitation can be reduced, ii) coagulation and tackiness of the particles of the esterified cellulose ether during the washing of the esterified cellulose ether can be reduced whereby its handling, transportability and washability during the purification process is improved and iii) a non-tacky finely powdered ester of a cellulose ether can be obtained.

Accordingly, one aspect of the present invention is a process for recovering an esterified cellulose ether from a reaction product mixture obtained from a reaction of (a) a cellulose ether with (b) an aliphatic monocarboxylic acid anhydride or a di- or tricarboxylic acid anhydride or a combination of an aliphatic monocarboxylic acid anhydride and a di- or tricarboxylic acid anhydride, wherein the process for recovering the esterified cellulose ether comprises the steps of (i) contacting the reaction product mixture with an aqueous liquid and precipitating the esterified cellulose ether from the reaction product mixture, and (ii) isolating the precipitated esterified cellulose ether from the mixture obtained in step (i), wherein a cellulose ether is added to the reaction product mixture in step (i), to the aqueous liquid or a combination thereof.

Another aspect of the present invention is a process for preparing an esterified cellulose ether wherein (a) a cellulose ether is reacted with (b) an aliphatic monocarboxylic acid anhydride or a di- or tricarboxylic acid anhydride or a combination of an aliphatic monocarboxylic acid anhydride and a di- or tricarboxylic acid anhydride in the presence of (c) an aliphatic carboxylic acid and the esterified cellulose ether is recovered from the produced reaction product mixture according to the above-mentioned process.

Yet another aspect of the present invention is a method of reducing the tackiness of an esterified cellulose ether in a process for recovering the esterified cellulose ether from a reaction product mixture obtained from a reaction of (a) a cellulose ether with (b) an aliphatic monocarboxylic acid anhydride or a di- or tricarboxylic acid anhydride or a combination of an aliphatic monocarboxylic acid anhydride and a di- or tricarboxylic acid anhydride, which method comprises the steps of (i) contacting the reaction product mixture with an aqueous liquid and precipitating the esterified cellulose ether from the reaction product mixture, and (ii) isolating the precipitated esterified cellulose ether from the mixture obtained in step (i), wherein a cellulose ether is added in step (i) to the reaction product mixture, to the aqueous liquid or a combination thereof.

### DESCRIPTION OF EMBODIMENTS

According to the process of the present invention an esterified cellulose ether is recovered as described further below from a reaction product mixture that has been obtained from a reaction of (a) a cellulose ether with (b) an aliphatic monocarboxylic acid anhydride or with a di- or tricarboxylic acid anhydride or with a combination of an aliphatic monocarboxylic acid anhydride and a di- or tricarboxylic acid anhydride, optionally in the presence of (c) an aliphatic carboxylic acid and optionally (d) an alkali metal carboxylate.

The cellulose ether (a) used as a starting material for the esterification reaction preferably is an alkyl cellulose, hydroxyalkyl cellulose or hydroxyalkyl alkylcellulose. The hydroxyalkoxy groups are typically hydroxymethoxy, hydroxyethoxy and/or hydroxypropoxy groups. Hydroxyethoxy and/or hydroxypropoxy groups are preferred. Preferably a single kind of hydroxyalkoxy group, more preferably hydroxypropoxy, is present in the cellulose ether. The alkoxy groups are typically methoxy, ethoxy and/or propoxy groups. Methoxy groups are preferred. Illustrative of the above-defined cellulose ethers are methylcellulose, ethylcellulose, and propylcellulose; hydroxyethylcellulose, hydroxypropylcellulose, hydroxyethyl methylcellulose, ethyl hydroxyethylcellulose, hydroxymethyl ethylcellulose, hydroxypropyl methylcellulose, hydroxypropyl ethylcellulose, hydroxybutyl methylcellulose, and hydroxybutyl ethylcellulose. A particularly preferred cellulose ether is one having a thermal flocculation point in water, such as, for example, methylcellulose, hydroxypropyl methylcellulose, hydroxyethyl methylcellulose, ethylhydroxy ethylcellulose, and hydroxypropyl cellulose. The cellulose ether is preferably water-soluble, which means that it has a solubility in water of at least 1 gram, more preferably at least 2 grams, most preferably at least 5 grams in 100 grams of distilled water at 25 °C and 1 atmosphere. More preferably, the cellulose ether is a hydroxypropyl methylcellulose.

The cellulose ether used as a starting material for the esterification reaction generally has a viscosity of from 1.20 to 400 mPa·s or from 1.20 to 100 mPa·s, preferably from 1.5 to 50 mPa·s, more preferably from 1.5 to 30 mPa·s, most preferably from 1.5 to 20 mPa·s and in particular from 1.5 to 10 mPa·s, measured as a 2 weight-% aqueous solution at 20 °C according to ASTM D2363 - 79 (Reapproved 2006). The process of the present invention is particularly useful when the cellulose ether that is used as a starting material for the esterification reaction has a viscosity of from 1.5 to 8.0 mPa·s, measured as indicated above. In one preferred embodiment of the invention the cellulose ether that is used as a starting material for the esterification reaction has a viscosity of from 4.0 to 8.0 mPa•s; in another preferred embodiment the cellulose ether has a viscosity of from 1.5 to 2.5 mPa·s, measured as indicated above. Esterified cellulose ethers produced from the latter cellulose ethers are particularly tacky. For these esterified cellulose ethers there is a special need to reduce tackiness.

The MS(hydroxyalkoxyl) is the average number of moles of hydroxyalkoxyl groups per anhydroglucose unit. The term "hydroxyalkoxyl groups" refers to the hydroxyalkoxyl groups as the constituting units of hydroxyalkoxyl substituents, which either comprise a single hydroxyalkoxyl group or a side chain, wherein two or more hydroxyalkoxy units are covalently bound to each other by ether bonding. Within this definition it is not important whether the terminal hydroxyl group of a hydroxyalkoxyl substituent is further alkylated, e.g. methylated, or not; both alkylated and non-alkylated hydroxyalkoxyl substituents are included for the determination of MS(hydroxyalkoxyl). The average number of hydroxyl groups substituted by alkoxy groups, such as methoxy groups, per anhydroglucose unit, is designated as the degree of substitution of alkoxy groups (DS). In the above-given definition of DS, the term "hydroxyl groups substituted by alkoxy groups" does not only include alkylated hydroxyl groups directly bound to the carbon atoms of the cellulose backbone, but also alkylated hydroxyl groups of hydroxyalkoxy substituents bound to the cellulose backbone.

In a preferred embodiment of the invention the cellulose ether is a hydroxypropyl methylcellulose which has a DS_{methoxyl} of from 1.0 to 2.7, preferably from 1.0 to 2.5, more preferably from 1.0 to 2.3, most preferably of 1.1 to 2.2, and particularly from 1.6 to 2.2, and an MS_{hydroxypropoxyl} of from 0.05 to 1.30, preferably from 0.10 to 1.20, and more preferably from 0.15 to 1.10. In one preferred embodiment the hydroxypropyl methylcellulose has a MS_{hydroxypropoxyl} of from 0.15 to 0.50, more preferably from 0.20 to 0.40. In another preferred embodiment hydroxypropyl methylcellulose has an MS_{hydroxypropoxyl} of from 0.40 to 1.30, more preferably from 0.60 to 1.00. The DS_{methoxyl} and MS_{hydroxypropoxyl} are determined according to United States Pharmacopeia and National Formulary, Hypromellose (hydroxpropyl methyl cellulose).

The process of the present invention is particularly useful when the cellulose ether that is used as a starting material for the esterification reaction is a hydroxypropyl methylcellulose which has a DS_{methoxyl} of from 1.0 to 2.7, preferably from 1.0 to 2.5, more preferably from 1.0 to 2.3, most preferably of 1.1 to 2.2, and particularly from 1.6 to 2.2, and an MS_{hydroxypropoxyl} of from 0.40 to 1.30, preferably from 0.40 to 1.20, more preferably from 0.50 to 1.10, most preferably from 0.60 to 1.10, and particularly from 0.60 to 1.00. In this embodiment of the invention the sum of the DS_{methoxyl} and MS_{hydroxypropoxyl} preferably is at least 1.8, more preferably at least 1.9, most preferable at least 2.5, and preferably up to 3.3, more preferably up to 3.2, most preferably up to 3.1. Esterified cellulose ethers produced from such cellulose ethers are particularly tacky and there is a special need to reduce their tackiness. The DS_{methoxyl} and MS_{hydroxypropoxyl} are determined as indicated above.

The cellulose ether (a) is reacted with (b) an aliphatic monocarboxylic acid anhydride or with a di- or tricarboxylic acid anhydride or with a combination of an aliphatic monocarboxylic acid anhydride and a di- or tricarboxylic acid anhydride. Preferred aliphatic monocarboxylic acid anhydrides are selected from the group consisting of acetic anhydride, butyric anhydride and propionic anhydride. Preferred dicarboxylic acid anhydrides are selected from the group consisting of succinic anhydride, maleic anhydride and phthalic anhydride. A preferred tricarboxylic acid anhydride is trimellitic anhydride. A preferred aliphatic monocarboxylic acid anhydride can be used alone; or a preferred di- or tricarboxylic acid anhydride can be used alone; or a preferred aliphatic monocarboxylic acid anhydride can be used in combination with a preferred di- or tricarboxylic acid anhydride.

The production of the following esterified cellulose ethers from the above-mentioned cellulose ethers, aliphatic monocarboxylic acid anhydrides and di- or tricarboxylic acid anhydrides is particularly preferred:
i) HPMC-XY and HPMC-X, wherein HPMC is hydroxypropyl methyl cellulose, X is A (acetate), or X is B (butyrate) or X is Pr (propionate) and Y is S (succinate), Y is P (phthalate), Y is M (maleate) or Y is T (trimellitate), such as hydroxypropyl methyl cellulose acetate phthalate (HPMCAP), hydroxypropyl methyl cellulose acetate trimellitate (HPMCAT), hydroxypropyl methyl cellulose acetate maleate (HPMCAM) or hydroxypropyl methylcellulose acetate succinate (HPMCAS); or
ii) hydroxypropyl methyl cellulose phthalate (HPMCP); hydroxypropyl cellulose acetate succinate (HPCAS), hydroxybutyl methyl cellulose propionate succinate (HBMCPrS), hydroxyethyl hydroxypropyl cellulose propionate succinate (HEHPCPrS); and methyl cellulose acetate succinate (MCAS).

Hydroxypropyl methylcellulose acetate succinate (HPMCAS) is the most preferred esterified cellulose ether. The HPMCAS preferably has a DS_{methoxyl} of from 1.0 to 2.7, more preferably from 1.0 to 2.5, even more preferably from 1.0 to 2.3, most preferably from 1.1 to 2.2, and particularly from 1.6 to 2.2, and an MS_{hydroxypropoxyl} of from 0.05 to 1.30, preferably from 0.10 to 1.20, and more preferably from 0.15 to 1.10. In one preferred embodiment the hydroxypropyl methylcellulose has a MS_{hydroxypropoxyl} of from 0.15 to 0.50, more preferably from 0.20 to 0.40. In another preferred embodiment hydroxypropyl methylcellulose has an MS_{hydroxypropoxyl} of from 0.40 to 1.30, more preferably from 0.60 to 1.00.

The process of the present invention is particularly useful when the produced HPMCAS has a DS_{methoxyl} of from 1.0 to 2.7, more preferably from 1.0 to 2.5, even more preferably from 1.0 to 2.3, most preferably from 1.1 to 2.2, and particularly from 1.6 to 2.2 and an MS_{hydroxypropoxyl} of from 0.40 to 1.30, preferably from 0.40 to 1.20, more preferably from 0.50 to 1.10, most preferably from 0.60 to 1.10, and particularly from 0.60 to 1.00. In this embodiment of the invention the sum of the DS_{methoxyl} and MS_{hydroxypropoxyl} preferably is at least 1.8, more preferably at least 1.9, most preferable at least 2.5 and preferably up to 3.3, more preferably up to 3.2, most preferably up to 3.1.

The produced esterified cellulose ether, particularly the HPMCAS, generally has a viscosity of from 1.20 to 400 mPa·s or 1.20 to 100 mPa·s, preferably from 1.5 to 50 mPa·s, more preferably from 1.5 to 30 mPa·s, even more preferably from 1.5 to 20 mPa·s, most preferably from1.5 to 10 mPa·s, and in particular from 1.5 to 8.0 mPa•s, measured as a 2.0 wt. % solution of the esterified cellulose ether in 0.43 wt. % aqueous NaOH at 20 °C. In one preferred embodiment the produced esterified cellulose ether has a viscosity of from 4.0 to 8.0 mPa•s; in another preferred embodiment the produced esterified cellulose ether has a viscosity of from 1.5 to 2.5 mPa·s, measured as indicated above. The 2.0 % by weight solution of the esterified cellulose ether is prepared as described in"Hypromellose Acetate Succinate, United States Pharmacopeia and National Formulary, NF 29, pp. 1548-1550", followed by an Ubbelohde viscosity measurement according to DIN 51562-1:1999-01 (January 1999).

The esterification of the cellulose ether can be conducted in a known manner, for example as described in U.S. Patent Nos. 3,435,027 and 4,226,981, in the International Patent Applications WO 2005/115330 and WO2013/148154, or in European Patent Application EP 0 219 426. The esterification of the cellulose ether is preferably conducted in (c) an aliphatic carboxylic acid as a reaction medium, such as acetic acid, propionic acid, or butyric acid. The reaction medium can comprise minor amounts of other solvents or diluents which are liquid at room temperature and do not react with the cellulose ether, such as halogenated C₁-C₃ derivatives, such as dichloro methane, or dichloro methyl ether, but the amount of the aliphatic carboxylic acid is preferably more than 50 percent, more preferably at least 75 percent, and even more preferably at least 90 percent, based on the total weight of the reaction medium. Most preferably the reaction medium consists of an aliphatic carboxylic acid. The esterification reaction is generally conducted in the presence of 100 to 2,000 parts by weight of an aliphatic carboxylic acid as the reaction medium per 100 parts by weight of the cellulose ether. The molar ratio [aliphatic carboxylic acid / anhydroglucose units of cellulose ether] generally is from [4.9 / 1.0] to [20.0 / 1.0], preferably from [5.5 / 1.0] to [17.0 / 1.0], more preferably from [5.7 / 1.0] to [15.0 / 1.0].

The esterification reaction is preferably conducted in the presence of (d) an esterification catalyst, more preferably in the presence of an alkali metal carboxylate, such as sodium acetate or potassium acetate. The amount of the alkali metal carboxylate is preferably 20 to 200 parts by weight of the alkali metal carboxylate per 100 parts by weight of the cellulose ether. If an aliphatic monocarboxylic acid anhydride and a di- or tricarboxylic acid anhydride are used for esterifying the cellulose ether, the two anhydrides may be introduced into the reaction vessel at the same time or separately one after the other.

The amount of each anhydride to be introduced into the reaction vessel is determined depending on the desired degree of esterification to be obtained in the final product, usually being 1 to 10 times the stoichiometric amounts of the desired molar degree of substitution of the anhydroglucose units by esterification. If an anhydride of an aliphatic monocarboxylic acid is used, the molar ratio between the anhydride of an aliphatic monocarboxylic acid and the anhydroglucose units of the cellulose ether generally is 0.6 or more, and preferably 0.8 or more. The molar ratio between the anhydride of an aliphatic monocarboxylic acid and the anhydroglucose units of the cellulose ether generally is 8 or less, preferably 6 or less, and more preferably 4 or less. If an anhydride of a dicarboxylic acid is used, the molar ratio between the anhydride of a dicarboxylic acid and the anhydroglucose units of cellulose ether generally is 0.1 or more, and preferably 0.13 or more. The molar ratio between the anhydride of a dicarboxylic acid and the anhydroglucose units of cellulose ether generally is 1.5 or less, and preferably 1 or less. The molar number of anhydroglucose units of the cellulose ether utilized in the process of the present invention can be determined from the weight of the cellulose ether used as a starting material, by calculating the average molecular weight of the substituted anhydroglucose units from the DS(alkoxyl) and MS(hydroxyalkoxyl).

The mixture is generally heated at 60 °C to 110 °C, preferably at 70 to 100 °C, for a period of time sufficient to complete the reaction, that is, typically from 2 to 25 hours, more typically from 2 to 8 hours. The cellulose ether as the starting material is not always soluble in the aliphatic carboxylic acid, but can only be dispersed in or swollen by the aliphatic carboxylic acid, especially when the degree of substitution in the cellulose ether is relatively small. The esterification reaction can take place even with such a dispersed or swollen cellulose ether and, as the esterification reaction proceeds, the cellulose ether under reaction generally dissolves in the reaction medium, to finally give a homogeneous solution.

The resulting reaction product mixture comprises the esterified cellulose ether, typically an aliphatic carboxylic acid used as a reaction medium, typically a reaction catalyst, such as an alkali metal carboxylate, typically residual amounts of one or more esterification agents and by-products, such as an aliphatic monocarboxylic acid and/or a di- or tricarboxylic acid. The resulting reaction product mixture generally comprises from 3 to 60, typically from 7 to 35 weight percent of the esterified cellulose ether; from 10 to 95, typically from 20 to 70 weight percent of an aliphatic carboxylic acid; from 1 to 50, typically from 5 to 30 weight percent of a reaction catalyst, such as an alkali metal carboxylate, and from 0.1 to 50, typically from 2 to 40 weight percent of minor components, such as non-reacted anhydrides of an aliphatic monocarboxylic acid and/or of a di- or tricarboxylic acid.

In step (i) of the process of the present invention the above-described reaction product mixture is contacted with an aqueous liquid and the esterified cellulose ether is precipitated from the reaction product mixture. It is an essential feature of the present invention that in step (i) a cellulose ether is added to the reaction product mixture, to the aqueous liquid or to a combination thereof. The cellulose ether can be added in one or more portions or continuously. Preferably the cellulose ether is added to a combination of reaction product mixture and aqueous liquid, i.e., preferably at least a portion of the aqueous liquid is first added to the reaction product mixture before adding cellulose ether. Preferred cellulose ethers that are added to the reaction product mixture in step (i) of the process of the present invention are those described further above which are useful as starting materials for producing the esterified cellulose ether.

The cellulose ethers that are added to the reaction product mixture in step (i) and the cellulose ethers that used as starting material in the esterification reaction can be independently selected from the above-described preferred cellulose ethers. The two cellulose ethers do not need to be the same, but they preferably are. The most preferred cellulose ether that is added to the reaction product mixture in step (i) is hydroxypropyl methyl cellulose. The cellulose ether can be added in step (i) in solid form or as a solution or dispersion in an aqueous liquid.

In a preferred embodiment of step (i) of the process of the present invention, the reaction product mixture is first diluted with a first amount of aqueous liquid without precipitating the esterified cellulose ether from the reaction product mixture and the diluted reaction product mixture is then contacted with a second amount of aqueous liquid to precipitate the esterified cellulose ether from the diluted reaction product mixture. The cellulose ether can be added while the reaction product mixture is diluted with the first amount of aqueous liquid, and/or after diluting the reaction product mixture with the first amount of aqueous liquid but before contacting the diluted reaction product mixture with a second amount of aqueous liquid, and/or while the diluted reaction product mixture is contacted with a second amount of aqueous liquid. The first amount of aqueous liquid is optional, i.e., it can be zero. Preferably the first amount of aqueous liquid is from 0.2 to 10 weight parts, more preferably from 0.5 to 5 weight parts, and most preferably from 1 to 3.5 weight parts of aqueous liquid per weight part of cellulose ether used for esterification. The first amount of aqueous liquid is used to quench the reaction product mixture. When the reaction product mixture is quenched, remaining amounts of anhydrides in the reaction product mixture are hydrolyzed and the esterification reaction is stopped. However, such quenching should be conducted without precipitating the esterified cellulose ether from the reaction product mixture. Preferably the second amount of aqueous liquid, that is used to precipitate the esterified cellulose ether from the diluted reaction product mixture, is from 5 to 400 weight parts, more preferably from 8 to 300 weight parts, most preferably from 10 to 100 weight parts, and particularly from 12 to 50 weight parts of aqueous liquid per weight part of cellulose ether used for esterification.

In another embodiment of step (i) of the process of the present invention, the reaction product mixture is directly contacted i.e., without intermediate dilution step, with an aqueous liquid to precipitate the esterified cellulose ether from the reaction product mixture. Preferably, the amount of aqueous liquid that is used to precipitate the esterified cellulose ether from the reaction product mixture is from 5 to 400 weight parts, more preferably from 8 to 300 weight parts, most preferably from 10 to 100 weight parts, and particularly from 12 to 50 weight parts of aqueous liquid per weight part of cellulose ether used for esterification.

In one preferred embodiment of the invention the cellulose ether can be added as a solid to the reaction product mixture. When an optional dilution, i.e., quenching step with a first amount of aqueous liquid is carried out as described above, the cellulose ether can be added before, during or preferably after addition of the first amount of aqueous liquid.

Alternatively, the cellulose ether can be dissolved or dispersed in the aqueous liquid. When an optional dilution, i.e., quenching step is carried out, the cellulose ether can be dissolved or dispersed in the first amount of liquid used for quenching or in the second amount of liquid used for precipitation before addition to the reaction product mixture. Alternatively, the cellulose ether can be added as a separate solution or dispersion during the optional dilution step or before or during the precipitation step. Preferably the cellulose ether is added as a 0.5 to 10 wt. %, more preferably as a 2 to 8 wt. %, and most preferably as a 4 to 6 wt. % solution or dispersion in an aqueous liquid. The cellulose ether solution or dispersion preferably has a temperature of from 1 to 98°C, more preferably from 10 to 90°C, when it is added to the reaction product mixture before step (i) or to the optionally diluted reaction product mixture in step (i).

The weight ratio between the cellulose ether that is added to the reaction product mixture in step (i) and the cellulose ether utilized for producing the esterified cellulose ether is preferably 0.05 : 1 or more, more preferably 0.1 : 1 or more, most preferably 0.25 : 1 or more, and particularly 0.4 : 1 or more. The weight ratio between the cellulose ether that is added to the reaction product mixture in step (i) and the cellulose ether that is utilized for producing the esterified cellulose ether is preferably 5 : 1 or less, more preferably 2 : 1 or less, most preferably 1 : 1 or less, and particularly 0.7 : 1 or less.

The aqueous liquid used in step (i) may comprise a minor amount of an organic liquid diluent; however, the aqueous liquid should comprise at least 55, preferably at least 65, more preferably at least 75, most preferably at least 90, and particularly at least 95 weight percent of water, based on the total weight of the liquid components of the aqueous liquid. Preferably the aqueous liquid is water wherein a cellulose ether is optionally dissolved or dispersed as described above.

The reaction product mixture comprising the esterified cellulose ether generally has a temperature of from 60 °C to 110 °C. It can be contacted with the aqueous liquid without previous cooling of the reaction product mixture. The temperature of the aqueous liquid preferably is from 1 to 98 °C, more preferably from 10 to 90 °C. Step (i) can be conducted under low shear, but it is preferably conducted as described in the International patent application WO 2013/148154, wherein the combination of aqueous liquid and the reaction product mixture is subjected to a shear rate of at least 800 s⁻¹, preferably at least 1500 s⁻¹, more preferably at least 3000 s⁻¹, and most preferably at least 8000 s⁻¹. The shear rate is generally up to 300,000 s⁻¹, typically up to 200,000 s⁻¹, more typically up to 100,000 s⁻¹ and most typically up to 50,000 s⁻¹.

In step (ii) of the process of the present invention the precipitated esterified cellulose ether is isolated from the remainder of the mixture obtained in step (i). Step (ii) of isolating the precipitated esterified cellulose ether from the mixture obtained in step (i) can be conducted in a known manner in a separation device, such as by centrifugation or filtration or upon settling by decantation or a combination thereof. Preferred separation devices are filtration devices or decanters, such as vacuum filters, pressure filters, screen and filter centrifuges or decanter centrifuges.

The isolated esterified cellulose ether is preferably purified by steps (iii) suspending the isolated esterified cellulose ether in an aqueous liquid to provide a suspension, and (iv) recovering the esterified cellulose ether from the suspension of step (iii).

In step (iii) the isolated esterified cellulose ether is preferably contacted with 2 to 400 weight parts, more preferably 3 to 300 weight parts, and most preferably 4 to 150 weight parts of aqueous liquid per weight part of esterified cellulose ether. The aqueous liquid may additionally comprise a minor amount of an organic liquid diluent, as described further above. The esterified cellulose ether is preferably suspended in the aqueous liquid under agitation, such as high-shear or low-shear blending.

Step (iv) can be conducted in a known manner in a separation device, such as by centrifugation or filtration or upon settling by decantation. Preferred separation devices are filtration devices or decanters, such as vacuum filters, pressure filters, screen and filter centrifuges or decanter centrifuges or a combination thereof. In step (iv) a purified esterified cellulose ether is obtained.

The sequence of steps (iii) and (iv) as described above can be repeated once or several times, preferably once to 5 times. E.g., a sequence of step (iii), step (iv), step (iii) and step (iv) can be conducted.

In at least one suspension step (iii) it is advisable to contact the esterified cellulose ether with an aqueous liquid that has a temperature of up to 27 °C, preferably from 3 to 25 °C, and more preferably from 3 to 20 °C. In this suspension step (iii), cellulose ether which has been added in step (i) to the reaction product mixture is dissolved in the aqueous liquid and separated from the esterified cellulose ether.

When the sequence of steps (iii) and (iv) as described above is conducted several times, preferably in the last suspension step (iii) the aqueous liquid has the above-mentioned temperature of up to 27 °C, preferably from 3 to 25 °C, and more preferably from 3 to 20 °C. When the sequence of steps (iii) and (iv) is conducted several times, the aqueous liquid utilized in the other suspension steps (iii) generally has temperature of from 3 °C to 95 °C, preferably from 10 °C to 90 °C, more preferably from 28 °C to 90 °C, and most preferably from 50 °C to 85 °C. Some embodiments of the invention will now be described in detail in the following Examples.

### EXAMPLES

Unless otherwise mentioned, all parts and percentages are by weight. In the Examples the following test procedures are used.

### Content of ether and ester groups in Hydroxypropyl Methyl Cellulose Acetate Succinate (HPMCAS)

The content of ether groups in the esterified cellulose ether is determined in the same manner as described for "Hypromellose", United States Pharmacopeia and National Formulary, USP 35, pp 3467-3469.

The ester substitution with acetyl groups (-CO-CH₃) and the ester substitution with succinoyl groups (-CO-CH₂-CH₂-COOH) are determined according to Hypromellose Acetate Succinate, United States Pharmacopeia and National Formulary, NF 29, pp. 1548-1550". Reported values for ester substitution are corrected for volatiles (determined as described in section "loss on drying" in the above HPMCAS monograph).

### Properties of hydroxypropyl methylcellulose (HPMC)

The content of methoxyl groups and of hydroxypropoxyl groups in HPMC are determined as described for "Hypromellose", United States Pharmacopeia and National Formulary, USP 35, pp 3467-3469.

The viscosity of HPMC is determined as a 2% by weight solution in water at 20°C by Ubbelohde viscosity measurement as described in the United States Pharmacopeia (USP 35, "Hypromellose", pages 423 - 424 and 3467 - 3469 and in ASTM D-445 and ISO 3105 referenced therein).

### Example 1

### I. Production of a Reaction Product Mixture comprising HPMCAS 514.07 g of glacial acetic acid, 202.49 g (dry content 98.77%) of a hydroxypropyl methylcellulose (HPMC), and 43.54 g of sodium acetate (water free) were introduced into a glass reactor with an inner diameter of 147 mm and intensively mixed by use of a MIG™ stirrer (two blade axial flow impeller, company EKATO, Schopfheim, Germany) with an outer diameter of 120 mm running at 300 rpm. The HPMC had a viscosity of about 5 mPa·s, measured as a 2 % aqueous solution at 20 °C, a degree of methoxyl substitution, DS(methoxyl), of 2.0, and a hydroxypropoxyl substitution, MS(hydroxypropoxyl), of 0.86.

The glass reactor was put in a heated bath and the mixture was heated to 85° C. 33.84 g of succinic anhydride and 147.69 g of acetic anhydride were added. Mixing was continued for 30 minutes, then 130.61 g of sodium acetate (water free) were added. Intense mixing was continued for 3 hours to effect esterification while the bath temperature was kept at 85° C.

### II: Recovering HPMCAS according to the Process of the Present Invention

The hot reaction product mixture as obtained in Procedure I above was quenched by addition of 318.46 g of water. The water had room temperature. The reaction product mixture was diluted by quenching and became less viscous.

HPMCAS was precipitated from the diluted reaction product mixture by adding a solution of 100 g of HPCM in 2 L of water having room temperature. The HPMC had a methoxyl substitution (DS_{M}) of 1.92, a hydroxypropoxyl substitution (MS_{HP}) of 0.24 and a viscosity of 3.0 mPa·s, measured as a 2 % solution in water at 20 °C. The HPMC is commercially available from The Dow Chemical Company as Methocel E3 LV Premium cellulose ether.

During the addition of water for quenching and of the HPMC solution for precipitation, the content of the glass reactor was stirred using the above described MIG™ stirrer running at 300 rpm.

HPMCAS was isolated from the resulting suspension via filtration. A modestly tacky filter cake was obtained.

The filter cake was re-suspended in 3 L of boiling water using an Ultra-Turrax stirrer S50-G45 (rotor diameter 36 mm, inner stator diameter 38 mm) running at 5000 rpm. HPMCAS was again isolated from the resulting suspension via filtration. The resulting filter cake was only slightly tacky.

The filter cake was re-suspended in 3 L of water having room temperature. Again the Ultra-Turrax stirrer S50-G45 running at 5000 rpm was used for re-suspension. HPMCAS was isolated from the resulting suspension via filtration. The resulting filter cake was not tacky at all.

The filter cake was thoroughly washed 5 times by re-suspension at 200 rpm in 3 L of water having room temperature and separation by filtration. After the final filtration HPMCAS was dried at 40°C. HPMC could be removed by these washing steps to a very large degree. A non-tacky filter cake remained. The residue of the remaining HPMC in the final HPMCAS product was determined by centrifugation of a 5 wt. % solution of the HPMCAS in acetone. The HPMC residue was only about 0.2 wt. %, based on the total weight of HPMCAS and HPMC.

### Comparative Example A:

### I. Production of a Reaction Product Mixture comprising HPMCAS

A reaction product mixture comprising HPMCAS was produced as in Example 1.

### II. Recovering HPMCAS Without Cellulose Ether Addition

The hot reaction product mixture as obtained in Procedure I was quenched by addition of 318.46 g of water. The water had room temperature. The reaction product mixture was diluted by quenching and became less viscous.

HPMCAS was precipitated from the diluted reaction product mixture by adding 2 L of water having room temperature.

During the addition of water for quenching and precipitation, the content of the glass reactor was stirred using the above described MIG™ stirrer running at 300 rpm.

HPMCAS was isolated from the resulting suspension via filtration. An extremely tacky filter cake was obtained that had the appearance of chewing gum.

The filter cake was re-suspended in 3 L of water having room temperature using an Ultra-Turrax stirrer S50-G45 (rotor diameter 36 mm, inner stator diameter 38 mm) running at 5000 rpm. HPMCAS was again isolated from the resulting suspension via filtration. The resulting filter cake was clearly tacky.

The filter cake was again re-suspended in 3 L of water having room temperature. Again the Ultra-Turrax stirrer S50-G45 running at 5000 rpm was used for re-suspension. HPMCAS was isolated from the resulting suspension via filtration. The resulting filter cake was still slightly tacky.

The filter cake was thoroughly washed 5 times by re-suspension at 200 rpm in 3 L of water having room temperature and separation by filtration. The resulting filter cake was still slightly tacky. After the final filtration HPMCAS was dried at 40°C.

### Comparative Example B:

Comparative Example A was repeated, except that after precipitation of the HPMCAS from the diluted reaction product mixture, isolating HPMCAS from the resulting suspension and recovering an extremely tacky filter cake that had the appearance of chewing gum, the filter cake was re-suspended in 3 L of boiling water using an Ultra-Turrax stirrer S50-G45 (rotor diameter 36 mm, inner stator diameter 38 mm) running at 5000 rpm.

The filter cake was re-suspended in 3 L of water having room temperature. Again the Ultra-Turrax stirrer S50-G45 running at 5000 rpm was used for re-suspension. HPMCAS was isolated from the resulting suspension via filtration. The resulting filter cake was even tackier than in Comparative Example A.

### Example 2

### I. Production of a Reaction Product Mixture comprising HPMCAS

A reaction product mixture comprising HPMCAS was produced as in Example 1.

### II: Recovering HPMCAS according to the Process of the Present Invention

The hot reaction product mixture as obtained in Procedure I was quenched by addition of 318.46g of water. The water had room temperature. 100g of the same type of HPMC as in Example 1 was added as a solid to the diluted reaction product mixture. After 10 min HPMCAS was precipitated from the diluted reaction product mixture by addition of 2L of water having 21°C.

HPMCAS was isolated from the resulting suspension via filtration. The filter cake was even less tacky than in Example 1.

The filter cake was then re-suspended in 3 L of boiling water using an Ultra-Turrax stirrer S50-G45 and again isolated from the resulting suspension via filtration, as described in Example 1. The resulting filter cake was again even less tacky than in Example 1.

The filter cake was re-suspended in 3 L of water having room temperature and again isolated from the resulting suspension via filtration, as described in Example 1. The resulting filter cake was not tacky at all. It was further processed as in Example 1.

## Claims

1. A process for recovering an esterified cellulose ether from a reaction product mixture obtained from a reaction of (a) a cellulose ether with (b) an aliphatic monocarboxylic acid anhydride or a di- or tricarboxylic acid anhydride or a combination of an aliphatic monocarboxylic acid anhydride and a di- or tricarboxylic acid anhydride, wherein the process comprises the steps of
(i) contacting the reaction product mixture with an aqueous liquid and precipitating the esterified cellulose ether from the reaction product mixture, and
(ii) isolating the precipitated esterified cellulose ether from the mixture obtained in step (i),
wherein a cellulose ether is added in step (i) to the reaction product mixture, to the aqueous liquid or a combination thereof.

2. The process of claim 1 wherein in step (i)
the reaction product mixture is first diluted with a first amount of aqueous liquid without precipitating the esterified cellulose ether from the reaction product mixture,
the diluted reaction product mixture is then contacted with a second amount of aqueous liquid to precipitate the esterified cellulose ether from the diluted reaction product mixture,
and the cellulose ether is added
- while diluting the reaction product mixture with the first amount of aqueous liquid, and/or
- after dilution of the reaction product mixture with the first amount of aqueous liquid and before contacting the diluted reaction product mixture with a second amount of aqueous liquid, and/or
- while contacting the diluted reaction product mixture with a second amount of aqueous liquid.

3. The process of claim 1 or 2, wherein the cellulose ether is dissolved or dispersed in the aqueous liquid, in the first amount of liquid, or in the second amount of liquid before addition to the reaction product mixture.

4. The process of any one of claims 1 to 3 wherein the reaction product mixture has been obtained from a reaction of (a) a cellulose ether with (b) an aliphatic monocarboxylic acid anhydride or a di- or tricarboxylic acid anhydride or a combination of an aliphatic monocarboxylic acid anhydride and a di- or tricarboxylic acid anhydride in the presence of a combination of (c) an aliphatic carboxylic acid and (d) an alkali metal carboxylate.

5. The process of any one of claims 1 to 4 wherein the weight ratio between the cellulose ether added to the reaction product mixture in step (i) and the cellulose ether utilized for producing the esterified cellulose ether is from 0.05 : 1 to 5 : 1.

6. The process of claim 5 wherein the weight ratio between the cellulose ether added to the reaction product mixture in step (i) and the cellulose ether utilized for producing the esterified cellulose ether is from 0.25 : 1 to 1 : 1.

7. The process of any one of claims 1 to 6 wherein each cellulose ether independently is an alkyl cellulose, a hydroxyalkyl cellulose or a hydroxyalkyl alkylcellulose.

8. The process of any one of claims 1 to 7 wherein each cellulose ether independently has a viscosity of from 1.5 to 50 mPa·s, measured as a 2 weight-% aqueous solution at 20 °C.

9. The process of any one of claims 1 to 8 wherein the aliphatic monocarboxylic acid anhydride is selected from the group consisting of acetic anhydride, butyric anhydride and propionic anhydride.

10. The process of any one of claims 1 to 9 wherein the di- or tricarboxylic acid anhydride is selected from the group consisting of succinic anhydride, maleic anhydride and phthalic anhydride.

11. The process of any one of claims 1 to 10 wherein hydroxypropyl methylcellulose is esterified with succinic anhydride and acetic anhydride to produce hydroxypropyl methyl cellulose acetate succinate.

12. The process of claim 11 wherein the hydroxypropyl methylcellulose acetate succinate has a DS_{methoxyl} of from 1.0 to 2.7 and an MS_{hydroxypropoxyl} of from 0.40 to 1.30.

13. The process of any one of claims 1 to 12 wherein the cellulose ether added in step (i) to the reaction product mixture, to the aqueous liquid or a combination thereof is hydroxypropyl methyl cellulose.

14. A process for preparing an esterified cellulose ether wherein (a) a cellulose ether is reacted with (b) an aliphatic monocarboxylic acid anhydride or a di- or tricarboxylic acid anhydride or a combination of an aliphatic monocarboxylic acid anhydride and a di- or tricarboxylic acid anhydride in the presence of (c) an aliphatic carboxylic acid and the esterified cellulose ether is recovered from the produced reaction product mixture according to the process of any one of claims 1 to 13.

15. A method of reducing the tackiness of an esterified cellulose ether in a process for recovering the esterified cellulose ether from a reaction product mixture obtained from a reaction of (a) a cellulose ether with (b) an aliphatic monocarboxylic acid anhydride or a di- or tricarboxylic acid anhydride or a combination of an aliphatic monocarboxylic acid anhydride and a di- or tricarboxylic acid anhydride, which method comprises the steps of
(i) contacting the reaction product mixture with an aqueous liquid and precipitating the esterified cellulose ether from the reaction product mixture, and
(ii) isolating the precipitated esterified cellulose ether from the mixture obtained in step (i),
wherein a cellulose ether is added in step (i) to the reaction product mixture, to the aqueous liquid or a combination thereof.

## Patentansprüche

1. Verfahren zur Rückgewinnung eines veresterten Celluloseethers aus einem Reaktionsproduktgemisch, erhalten aus einer Reaktion von (a) einem Celluloseether mit (b) einem Anhydrid einer aliphatischen Monocarbonsäure oder einem Di- oder Tricarbonsäureanhydrid oder einer Kombination von einem Anhydrid einer aliphatischen Monocarbonsäure und einem Di- oder Tricarbonsäureanhydrid, wobei das Verfahren die folgenden Schritte umfasst
(i) In-Kontakt-Bringen des Reaktionsproduktgemischs mit einer wässrigen Flüssigkeit und Ausfällen des veresterten Celluloseethers aus dem Reaktionsproduktgemisch, und
(ii) Isolieren des ausgefällten veresterten Celluloseethers aus dem in Schritt (i) erhaltenen Gemisch,
wobei ein Celluloseether in Schritt (i) dem Reaktionsproduktgemisch, der wässrigen Flüssigkeit oder einer Kombination davon zugegeben wird.

2. Verfahren nach Anspruch 1, wobei in Schritt (i)
das Reaktionsproduktgemisch zunächst mit einer ersten Menge wässriger Flüssigkeit verdünnt wird, ohne Ausfällen des veresterten Celluloseethers aus dem Reaktionsproduktgemisch,
das verdünnte Reaktionsproduktgemisch dann mit einer zweiten Menge wässriger Flüssigkeit in Kontakt gebracht wird, um den veresterten Celluloseether aus dem verdünnten Reaktionsproduktgemisch auszufällen,
und der Celluloseether zugegeben wird
- während Verdünnung des Reaktionsproduktgemischs mit der ersten Menge wässriger Flüssigkeit, und/oder
- nach Verdünnung des Reaktionsproduktgemischs mit der ersten Menge wässriger Flüssigkeit und vor In-Kontakt-Bringen des verdünnten Reaktionsproduktgemischs mit einer zweiten Menge wässriger Flüssigkeit, und/oder
- während In-Kontakt-Bringens des verdünnten Reaktionsproduktgemischs mit einer zweiten Menge wässriger Flüssigkeit.

3. Verfahren nach Anspruch 1 oder 2, wobei der Celluloseether gelöst oder dispergiert wird in der wässrigen Flüssigkeit, in der ersten Menge Flüssigkeit oder in der zweiten Menge Flüssigkeit vor Zugabe zum Reaktionsproduktgemisch.

4. Verfahren nach einem der Ansprüche 1 bis 3, wobei das Reaktionsproduktgemisch erhalten worden ist aus einer Reaktion von (a) einem Celluloseether mit (b) einem Anhydrid einer aliphatischen Monocarbonsäure oder einem Di- oder Tricarbonsäureanhydrid oder einer Kombination von einem Anhydrid einer aliphatischen Monocarbonsäure und einem Di- oder Tricarbonsäureanhydrid in Gegenwart von einer Kombination von (c) einer aliphatischen Carbonsäure und (d) einem Alkalimetallcarboxylat.

5. Verfahren nach einem der Ansprüche 1 bis 4, wobei das Gewichtsverhältnis zwischen dem Celluloseether, der dem Reaktionsproduktgemisch in Schritt (i) zugegeben wird, und dem Celluloseether, der zum Herstellen des veresterten Celluloseethers verwendet wird, 0,05:1 bis 5:1 beträgt.

6. Verfahren nach Anspruch 5, wobei das Gewichtsverhältnis zwischen dem Celluloseether, der dem Reaktionsproduktgemisch in Schritt (i) zugegeben wird, und dem Celluloseether, der zum Herstellen des veresterten Celluloseethers verwendet wird, 0,25:1 bis 1:1 beträgt.

7. Verfahren nach einem der Ansprüche 1 bis 6, wobei jeder Celluloseether unabhängig eine Alkylcellulose, eine Hydroxyalkylcellulose oder eine Hydroxyalkylalkylcellulose ist.

8. Verfahren nach einem der Ansprüche 1 bis 7, wobei jeder Celluloseether unabhängig eine Viskosität von 1,5 bis 50 mPa·s aufweist, gemessen als 2-gewichtsprozentige wässrige Lösung bei 20 °C.

9. Verfahren nach einem der Ansprüche 1 bis 8, wobei das Anhydrid der aliphatischen Monocarbonsäure aus der Gruppe ausgewählt ist, die aus Essigsäureanhydrid, Buttersäureanhydrid und Propionsäureanhydrid besteht.

10. Verfahren nach einem der Ansprüche 1 bis 9, wobei das Di- oder Tricarbonsäureanhydrid aus der Gruppe ausgewählt ist, die aus Bernsteinsäureanhydrid, Maleinsäureanhydrid und Phthalsäureanhydrid besteht.

11. Verfahren nach einem der Ansprüche 1 bis 10, wobei Hydroxypropylmethylcellulose mit Bernsteinsäureanhydrid und Essigsäureanhydrid verestert wird, um Hydroxypropylmethylcellulose-Acetat-Succinat herzustellen.

12. Verfahren nach Anspruch 11, wobei das Hydroxypropylmethylcellulose-Acetat-Succinat ein DS_{Methoxyl} von 1,0 bis 2,7 und ein MS_{Hydroxypropoxyl} von 0,40 bis 1,30 aufweist.

13. Verfahren nach einem der Ansprüche 1 bis 12, wobei der Celluloseether, der in Schritt (i) dem Reaktionsproduktgemisch, der wässrigen Flüssigkeit oder einer Kombination davon zugegeben wird, Hydroxypropylmethylcellulose ist.

14. Verfahren zur Herstellung eines veresterten Celluloseethers, wobei (a) ein Celluloseether umgesetzt wird mit (b) einem Anhydrid einer aliphatischen Monocarbonsäure oder einem Di- oder Tricarbonsäureanhydrid oder einer Kombination von einem Anhydrid einer aliphatischen Monocarbonsäure und einem Di- oder Tricarbonsäureanhydrid in Gegenwart von (c) einer aliphatischen Carbonsäure und der veresterte Celluloseether aus dem hergestellten Reaktionsproduktgemisch gemäß dem Verfahren nach einem der Ansprüche 1 bis 13 rückgewonnen wird.

15. Verfahren zur Verringerung der Klebrigkeit eines veresterten Celluloseethers in einem Prozess zur Rückgewinnung des veresterten Celluloseethers aus einem Reaktionsproduktgemisch, erhalten aus einer Reaktion von (a) einem Celluloseether mit (b) einem Anhydrid einer aliphatischen Monocarbonsäure oder einem Di- oder Tricarbonsäureanhydrid oder einer Kombination von einem Anhydrid einer aliphatischen Monocarbonsäure und einem Di- oder Tricarbonsäureanhydrid, welches Verfahren die folgenden Schritte umfasst
(i) In-Kontakt-Bringen des Reaktionsproduktgemischs mit einer wässrigen Flüssigkeit und Ausfällen des veresterten Celluloseethers aus dem Reaktionsproduktgemisch, und
(ii) Isolieren des ausgefällten veresterten Celluloseethers aus dem in Schritt (i) erhaltenen Gemisch,
wobei ein Celluloseether in Schritt (i) dem Reaktionsproduktgemisch, der wässrigen Flüssigkeit oder einer Kombination davon zugegeben wird.

## Revendications

1. Procédé pour la récupération d'un éther de cellulose estérifié à partir d'un mélange de produits réactionnels obtenu à partir d'une réaction de (a) un éther de cellulose avec (b) un anhydride d'acide monocarboxylique aliphatique ou un anhydride d'acide di- ou tricarboxylique ou une combinaison d'un anhydride d'acide monocarboxylique aliphatique et d'un anhydride d'acide di- ou tricarboxylique, où le procédé comprend les étapes de:
(i) mise en contact du mélange de produits réactionnels avec un liquide aqueux et précipitation de l'éther de cellulose estérifié à partir du mélange de produits réactionnels, et
(ii) isolement de l'éther de cellulose estérifié précipité à partir du mélange obtenu dans l'étape (i),
dans lequel un éther de cellulose est ajouté dans l'étape (i) au mélange de produits réactionnels, au liquide aqueux ou à une combinaison de ceux-ci.

2. Procédé selon la revendication 1, dans lequel dans l'étape (i):
le mélange de produits réactionnels est tout d'abord dilué avec une première quantité de liquide aqueux sans la précipitation de l'éther de cellulose estérifié à partir du mélange de produits réactionnels,
le mélange de produits réactionnels dilué est ensuite mis en contact avec une deuxième quantité de liquide aqueux pour précipiter l'éther de cellulose estérifié à partir du mélange de produits réactionnels dilué,
et l'éther de cellulose est ajouté:
- tout en diluant le mélange de produits réactionnels avec la première quantité de liquide aqueux, et/ou
- après la dilution du mélange de produits réactionnels avec la première quantité de liquide aqueux et avant la mise en contact du mélange de produits réactionnels dilué avec une deuxième quantité de liquide aqueux, et/ou
- tout en mettant en contact le mélange de produits réactionnels dilué avec une deuxième quantité de liquide aqueux.

3. Procédé selon la revendication 1 ou 2, dans lequel l'éther de cellulose est dissous ou dispersé dans le liquide aqueux, dans la première quantité de liquide ou dans la deuxième quantité de liquide avant l'ajout au mélange de produits réactionnels.

4. Procédé selon l'une quelconque des revendications 1 à 3, dans lequel le mélange de produits réactionnels a été obtenu à partir d'une réaction de (a) un éther de cellulose avec (b) un anhydride d'acide monocarboxylique aliphatique ou un anhydride d'acide di- ou tricarboxylique ou une combinaison d'un anhydride d'acide monocarboxylique aliphatique et d'un anhydride d'acide di- ou tricarboxylique en présence d'une combinaison de (c) un acide carboxylique aliphatique et (d) un carboxylate de métal alcalin.

5. Procédé selon l'une quelconque des revendications 1 à 4, dans lequel le rapport en poids entre l'éther de cellulose ajouté au mélange de produits réactionnels dans l'étape (i) et l'éther de cellulose utilisé pour la production de l'éther de cellulose estérifié est de 0,05:1 à 5:1.

6. Procédé selon la revendication 5, dans lequel le rapport en poids entre l'éther de cellulose ajouté au mélange de produits réactionnels dans l'étape (i) et l'éther de cellulose utilisé pour la production de l'éther de cellulose estérifié est de 0,25:1 à 1:1.

7. Procédé selon l'une quelconque des revendications 1 à 6, dans lequel chaque éther de cellulose est indépendamment une alkylcellulose, une hydroxyalkylcellulose ou une hydroxyalkylalkylcellulose.

8. Procédé selon l'une quelconque des revendications 1 à 7, dans lequel chaque éther de cellulose a indépendamment une viscosité de 1,5 à 50 mPa.s, mesurée sous forme d'une solution aqueuse de 2% en poids à 20°C.

9. Procédé selon l'une quelconque des revendications 1 à 8, dans lequel l'anhydride d'acide monocarboxylique aliphatique est choisi dans le groupe constitué d'anhydride acétique, d'anhydride butyrique et d'anhydride propionique.

10. Procédé selon l'une quelconque des revendications 1 à 9, dans lequel l'anhydride d'acide di- ou tricarboxylique est choisi dans le groupe constitué d'anhydride succinique, d'anhydride maléique et d'anhydride phtalique.

11. Procédé selon l'une quelconque des revendications 1 à 10, dans lequel de l'hydroyxpropylméthylcellulose est estérifiée avec de l'anhydride succinique et de l'anhydride acétique pour produire du succinate acétate d'hydroxypropylméthylcellulose.

12. Procédé selon la revendication 11, dans lequel le succinate acétate d'hydroxypropylméthylcellulose a une valeur de DS_{méthoxyle} de 1,0 à 2,7 et une valeur de MS_{hydroxypropoxyle} de 0,40 à 1,30.

13. Procédé selon l'une quelconque des revendications 1 à 12, dans lequel l'éther de cellulose ajouté dans l'étape (i) au mélange de produits réactionnels, au liquide aqueux ou à une combinaison de ceux-ci est l'hydroxypropylméthylcellulose.

14. Procédé pour la récupération d'un éther de cellulose estérifié dans lequel (a) un éther de cellulose est mis à réagir avec (b) un anhydride d'acide monocarboxylique aliphatique ou un anhydride d'acide di- ou tricarboxylique ou une combinaison d'un anhydride d'acide monocarboxylique aliphatique et d'un anhydride d'acide di- ou tricarboxylique en présence de (c) un acide carboxylique aliphatique et l'éther de cellulose estérifié est récupéré à partir du mélange de produits réactionnels produit selon le procédé de l'une quelconque des revendications 1 à 13.

15. Procédé pour la réduction de l'adhérence d'un éther de cellulose estérifié dans un processus pour la récupération de l'éther de cellulose estérifié à partir d'un mélange de produits réactionnels obtenu à partir d'une réaction de (a) un éther de cellulose avec (b) un anhydride d'acide monocarboxylique aliphatique ou un anhydride d'acide di- ou tricarboxylique ou une combinaison d'un anhydride d'acide monocarboxylique aliphatique et d'un anhydride d'acide di- ou tricarboxylique, lequel procédé comprend les étapes de:
(i) mise en contact du mélange de produits réactionnels avec un liquide aqueux et précipitation de l'éther de cellulose estérifié à partir du mélange de produits réactionnels, et
(ii) isolement de l'éther de cellulose estérifié précipité à partir du mélange obtenu dans l'étape (i),
dans lequel un éther de cellulose est ajouté dans l'étape (i) au mélange de produits réactionnels, au liquide aqueux ou à une combinaison de ceux-ci.
